# EUROPEAN PATENT APPLICATION

(11) **EP 4 439 783 A2**
(43) Date of publication of application: **02.10.2024**
(21) Application number: 24167171.8
(22) Date of filing: 28.03.2024
(51) Int. Cl.: H01M 10/42, H01M 50/209, H01M 50/284, H01M 50/296, H01M 50/507, H01M 50/519

(54) **BATTERY PACK AND ELECTRICAL DEVICE**

(30) Priority: 31.03.2023 CN 202310335682
(71) Applicant: Xiamen Ampack Technology Limited, Xiamen City, Fujian Province 361000 (CN)
(72) Inventor: YANG, Sen, Xiamen City, Fujian Province 361000 (CN); CHEN, Dahe, Xiamen City, Fujian Province 361000 (CN); WANG, Pengfei, Xiamen City, Fujian Province 361000 (CN)
(74) Representative: Icosa

(57) **Abstract**

A battery pack includes a first housing, a second housing, a cell module, and a plurality of connecting component. The first housing includes a first top wall. The second housing is accommodated in the first housing and connected to the first housing. The second housing and the first top wall are spaced apart along a first direction. The cell module is accommodated in the second housing. The connecting component is connected to the first top wall and the second housing. A structural strength of the connecting component is greater than a structural strength of the second housing.

## Description

### TECHNICAL FIELD

This application relates to the field of batteries, and in particular, to a battery pack and an electrical device.

### BACKGROUND

A rechargeable battery cell is a battery cell that is reusable after the active material is activated by charging the battery cell that is discharged. Rechargeable battery cells are widely used in electrical devices, such as unmanned aerial vehicle, electric tool, electric two-wheeler, and portable energy storage device.

A battery pack typically includes a plurality of battery cells to meet the voltage requirement of the electrical device. In the development of battery technology, how to improve the reliability of the battery pack has been a research topic in the industry.

### SUMMARY

This application provides a battery pack and an electrical device to improve reliability of the battery pack.

According to a first aspect, this application provides a battery pack. The battery pack includes a first housing, a second housing, a cell module, and a connecting component. The first housing includes a first top wall. The second housing is accommodated in the first housing and connected to the first housing. The second housing and the first top wall are spaced apart along a first direction. The cell module is accommodated in the second housing. The connecting component is connected to the first top wall and the second housing. Structural strength of the connecting component is greater than structural strength of the second housing.

The second housing and the first top wall are spaced apart so as to provide an accommodation space for other components. When the first housing is subjected to an external impact, the connecting component can transfer the force to the second housing, thereby effectively dispersing the stress, reducing the risk of structural damage to the battery pack, and improving the reliability of the battery pack. The connecting component is structurally stronger than the second housing, and can withstand a greater force, thereby reducing the risk of fracture of the connecting component when the first housing is subjected to an external impact.

In some embodiments, the second housing includes a second top wall. The second top wall and the first top wall are spaced apart along the first direction. A first opening is created on the second top wall. The cell module includes a cell assembly and a first circuit board. The cell assembly includes a plurality of battery cells arranged along a second direction. The first direction is perpendicular to the second direction. Along the first direction, the first circuit board is located between the cell assembly and the second top wall. The first circuit board is electrically connected to the cell assembly. The first circuit board includes a substrate, a first connecting terminal, and a second connecting terminal. The substrate includes a first surface oriented toward the second top wall. The first connecting terminal and the second connecting terminal are disposed on the first surface. An accommodation space is created on the first surface on a side oriented toward the second top wall. The accommodation space is opposite to the first opening along the first direction. The battery pack further includes a first busbar and a second busbar. The first busbar is connected to the first connecting terminal in the accommodation space and extends out of the second housing. The second busbar is connected to the second connecting terminal in the accommodation space and extends out of the second housing.

With the first busbar connected to the first connecting terminal in the accommodation space, the junction between the first busbar and the first connecting terminal can be kept in the second housing, thereby reducing the risk of a short circuit. With the second busbar connected to the second connecting terminal in the accommodation space, the junction between the second busbar and the second connecting terminal can be kept in the second housing, thereby reducing the risk of a short circuit.

In some embodiments, the battery pack includes a sealing component. At least a part of the sealing component is located in the accommodation space. The sealing component is connected to the first surface in a contacting manner. A second opening is created on the sealing component. Both the first connecting terminal and the second connecting terminal are accommodated in the second opening. The battery pack further includes a filler. At least a part of the filler fills in the second opening and forms a sealing interface at the first opening.

The filler can form a sealing interface at the first opening to block external moisture, impurities, and the like from entering the second housing, thereby protecting the battery cell and the second circuit board. The filler that fills in the second opening can cover the junction between the first busbar and the first connecting terminal and the junction between the second busbar and the second connecting terminal, thereby reducing the risk that the external impurities (such as moisture) implement electrical conduction between the first connecting terminal and the second connecting terminal, reducing the risk of a short-circuit, and improving safety performance. The sealing component may limit the position of the filler when the filler fills in the opening, thereby reducing the risk that the filler overflows to other regions of the first surface.

In some embodiments, the sealing component includes a plurality of second openings. The first connecting terminal and the second connecting terminal are accommodated in different second openings respectively. The sealing component can isolate the first connecting terminal from the second connecting terminal, thereby increasing a creepage distance between the first connecting terminal and the second connecting terminal, and improving safety.

In some embodiments, the second housing includes a first component. At least a part of the first component protrudes beyond a surface of the second top wall, the surface being oriented toward the first top wall. The first component is connected to the connecting component. The disposed first component increases the strength of the second housing, the strength of connection between the first component and the connecting component, and the impact resistance.

In some embodiments, the second housing includes two first sidewalls disposed opposite to each other along a third direction. The first direction, the second direction, and the third direction are perpendicular to each other. The first component includes a first part and a second part disposed along the first direction. The first part protrudes beyond the first sidewall along the third direction. The second part protrudes beyond the first top wall along the first direction. The connecting component is disposed on a side of the second part along the third direction and connected to the second part. The first part is connected to the connecting component along the first direction in a contacting manner.

When the impact force on the first top wall is transmitted to the connecting component, the first part can support the connecting component in the first direction and withstand the impact force, thereby reducing the force on the first sidewall and reducing the risk of structural damage to the second housing.

In some embodiments, a first recess is disposed at an end of the connecting component, the end being close to the first part. A first bulge is disposed at an end of the second part, the end being close to the first part. The first bulge is connected to the first part in a contacting manner and accommodated in the first recess.

The first bulge and the first recess are in concave-convex fit with each other, and can play a positioning role in assembling the connecting component and the second housing. With the first bulge disposed, the contact area between the connecting component and the first component is increased, thereby facilitating transfer and dispersal of the stress.

In some embodiments, the first part assumes a rib structure. The rib-structured first part can reduce the weight of the first part and increase the energy density of the battery pack while ensuring sufficient strength.

In some embodiments, the battery pack further includes a second circuit board. The second circuit board is located between the first top wall and the second top wall and connected to the second part. The second part can provide a mounting site for the second circuit board, and stably support the second circuit board, thereby reducing the risk of wobbling of the second circuit board when the battery pack is subjected to an external impact, and improving the reliability of the battery pack.

In some embodiments, the battery pack further includes a bracket. The bracket is located between the second circuit board and the second top wall. The second housing includes a plurality of the first components. The bracket is connected to the second circuit board and at least a part of the plurality of the first components. The bracket can support the second circuit board from a lower side, thereby increasing the stability of the second circuit board and reducing the risk of deformation of the second circuit board.

In some embodiments, a second bulge is disposed on a part of the first components. The second bulges protrude beyond the second part. The second bulges are connected to the second circuit board. Remaining first components are connected to the second circuit board by the bracket.

On the first components that are not connected to the bracket, the second bulges may be disposed to directly abut against the second circuit board, so as to uniformly support the second circuit board and reduce skewness of the second circuit board.

In some embodiments, the second housing includes a first sub-housing and a second sub-housing disposed along the third direction. The first sub-housing is formed in one piece. The first sub-housing includes one first sidewall and at least two first components. The second sub-housing is formed in one piece. The second sub-housing includes another first sidewall and at least two first components.

The first sub-housing and the second sub-housing are formed in one piece, and are structurally strong and can provide more stable support for the connecting component, thereby reducing the risk of structural damage to the battery pack subjected to an external impact.

In some embodiments, the second housing further includes a third bulge. The third bulge protrudes beyond a surface of the second top wall, the surface being oriented toward the first top wall. In the first direction, an amount of height by which the second part protrudes beyond the second top wall is greater than an amount of height by which the third bulge protrudes beyond the second top wall. The battery pack further includes a third circuit board. The third circuit board is located between the second circuit board and the second top wall and connected to the third bulge.

The third bulge can provide a mounting site for the third circuit board, and stably support the third circuit board, thereby reducing the risk of wobbling of the third circuit board when the battery pack is subjected to an external impact, and improving the reliability of the battery pack. The amount of height by which the third bulge protrudes beyond the second top wall is less than the amount of height by which the second part protrudes beyond the second top wall, thereby allowing the second circuit board and the third circuit board to be at different heights, and reducing the risk of mutual interference between the second circuit board and the third circuit board.

In some embodiments, the battery pack further includes an external interface disposed on an outer side of the second housing. The first busbar connects the first connecting terminal to the second circuit board, the third circuit board, and the external interface. The second busbar connects the second connecting terminal to the second circuit board, the third circuit board, and the external interface.

The first busbar and the second busbar connect the first circuit board, the second circuit board, the third circuit board, and the external interface together, thereby improving the space utilization and reducing connection complexity.

In some embodiments, a plurality of the connecting components are disposed. The plurality of connecting components can further improve the overall structural strength of the battery pack, reduce the risk of structural damage to the battery pack, and improve the reliability of the battery pack.

In some embodiments, the first direction, the second direction, and the third direction are perpendicular to each other. The first housing further includes a first bottom wall, two first side shells, and two control panels. The first bottom wall and the first top wall are disposed along the first direction. The first bottom wall is connected to the second housing. The two first side shells are disposed on two sides of the second housing along the third direction respectively, and connected to the second housing. The two control panels are disposed on two sides of the second housing along the second direction respectively, and connected to the second housing. The first side shell is connected to the first top wall and the first bottom wall.

In some embodiments, a protruding second component is disposed at two ends of the second housing along the second direction. The first side shell is connected to the second component. The protruding second component is structurally strong. Connecting the first side shell to the second component increases the strength of connection between the first side shell and the second housing, and improves the overall stability of the battery pack.

In some embodiments, the first side shell includes a shell body and a first connecting plate extending from an inner surface of the shell body. In the first direction, the first connecting plate is located between the connecting component and the first top wall, and connected to the connecting component and the first top wall.

The connecting component and the first top wall can limit the position of the first connection plate from both sides of the first direction, thereby improving the stability of the first side shell. The connecting component, the first connection plate, and the first top wall are connected concurrently, so that the impact force on the first top wall and the first side shell can be dispersed through the connecting component, thereby improving the overall structural strength of the battery pack and reducing the risk of failure of the battery pack.

In some embodiments, a first hole is created on the first connecting plate. A part of the first top wall is accommodated in the first hole. In assembling the first top wall and the first side shell, the first hole can play a positioning role.

In some embodiments, the first housing further includes two second side shells. The two second side shells are disposed along the second direction. Each of the second side shells is connected to the first top wall and the two first side shells. A third opening is created on the second side shell. At least a part of the control panels is exposed through the third opening. The second side shells can protect the control panels, and limit the positions of the control panels, thereby improving the stability of the control panels. The operating interface of the control panel can be exposed through the third opening to facilitate user operation.

In some embodiments, the first side shell further includes a second connecting plate extending from the inner surface of the shell body. In the first direction, the second connecting plate is located between the second side shell and the first top wall, and connected to the second side shell and the first top wall. The disposed second connecting plate facilitates implementation of the fixed connection between the first side shell, the second side shell, and the first top wall, and increases the structural strength of the battery pack as a whole.

In some embodiments, a second recess is disposed on the first bottom wall. One end of the first side shell along the first direction is accommodated in the second recess. During assembling, the second recess serves to define the position of the first side shell. At the same time, the first bottom wall can be snap-fitted to the first side shell through the second recess, thereby increasing the overall structural strength of the battery pack.

According to a second aspect, this application provides an electrical device. The electrical device includes the battery pack according to any one of the embodiments in the first aspect.

### BRIEF DESCRIPTION OF DRAWINGS

The following describes features, advantages, and technical effects of exemplary embodiments of this application with reference to accompanying drawings.
FIG. 1 is a schematic structural diagram of a battery pack according to some embodiments of this application;
FIG. 2 is a schematic exploded view of the battery pack shown in FIG. 1;
FIG. 3 is a schematic diagram of a partial structure of a battery pack according to some embodiments of this application;
FIG. 4 is a three-dimensional cross-sectional schematic view of the battery pack shown in FIG. 3;
FIG. 5 is a schematic close-up view of a circled part shown in FIG. 4;
FIG. 6 is another schematic diagram of the battery pack shown in FIG. 3, in which a filler and a harness are omitted;
FIG. 7 is a schematic exploded view of the battery pack shown in FIG. 6;
FIG. 8 is a schematic structural diagram of a connecting component shown in FIG. 7;
FIG. 9 is a schematic structural diagram of a first sub-housing shown in FIG. 7;
FIG. 10 is a schematic structural diagram of a second sub-housing shown in FIG. 7;
FIG. 11 is a schematic structural diagram of a sealing component shown in FIG. 7;
FIG. 12 is a schematic diagram of a partial structure of a battery pack according to some embodiments of this application;
FIG. 13 is a schematic close-up view of a circled part shown in FIG. 12;
FIG. 14 is a schematic diagram of a partial structure of a battery pack according to some embodiments of this application;
FIG. 15 is a schematic close-up view of a circled part shown in FIG. 14;
FIG. 16 is a cross-sectional schematic view of a battery pack according to some embodiments of this application;
FIG. 17 is another cross-sectional schematic view of a battery pack according to some embodiments of this application;
FIG. 18 is still another cross-sectional schematic view of a battery pack according to some embodiments of this application; and
FIG. 19 is a three-dimensional cross-sectional schematic view of a battery pack according to some embodiments of this application.

### List of reference numerals:

| | |
|---|---|
| 1-first housing | 3-cell module |
| 11-first top wall | 30-cell assembly |
| 12-first bottom wall | 31-battery cell |
| 121-second recess; | 32-first circuit board |
| 13-first side shell | 321-substrate |
| 131-shell body | 3211-first surface |
| 132-first connecting plate | 322-first connecting terminal |
| 133-first hole | 323-second connecting terminal |
| 134-second connecting plate | 324-connector |
| 14-control panel | 4-connecting component |
| 15-second side shell | 41-first recess |
| 151-third opening | 5a-first busbar |
| 2-second housing | 5b-second busbar |
| 21-second top wall | 6-sealing component |
| 211-first opening | 61-second opening |
| 22-first component | 7-filler |
| 221-first part | 8-harness |
| 222-second part | 91-second circuit board |
| 222a-first bulge | 92-bracket |
| 223-second bulge | 93-third circuit board |
| 23-second component | 94-external interface |
| 24-first sub-housing | S-accommodation space |
| 25-second sub-housing | Y-third direction |
| 26-first sidewall | X-second direction |
| 27-third bulge | Z-first direction |

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. The following embodiments are merely intended as examples to describe the technical solutions of this application more clearly, but not intended to limit the protection scope of this application. A person skilled in the art understands that, to the extent that no conflict occurs, the following embodiments and the features in the embodiments may be combined with each other.

In the description of this application, unless otherwise expressly specified and defined, the terms such as "mount" and "connect" are understood in a broad sense. For example, a "connection" may be a fixed connection, a detachable connection, or an integrated connection; or may be a direct connection or indirect connection implemented through an intermediary; or may be internal communication between two components. A person of ordinary skill in the art is able to understand the specific meanings of the terms in this application according to specific situations.

In embodiments of this application, the term "parallel" includes not only absolute parallelism, but also approximate parallelism conventionally known in engineering. The term "perpendicular" or "vertical" includes not only absolute perpendicularity, but also approximate perpendicularity conventionally known in engineering. As an example, if the angle between two directions is 80° to 90°, the two directions may be deemed perpendicular; and, if the angle between two directions is 0° to 10°, the two directions may be deemed parallel.

The following describes the battery pack of this application with reference to drawings.

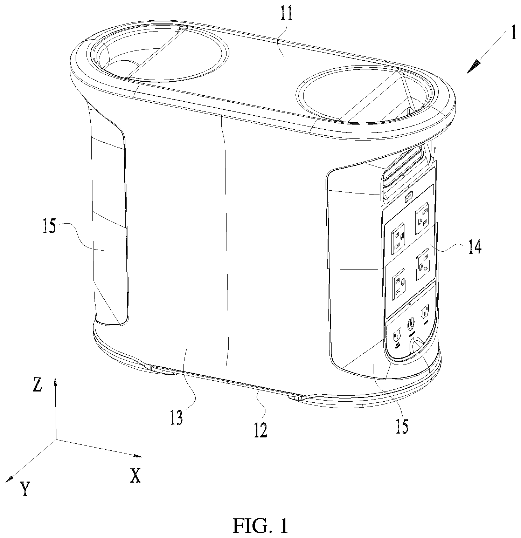

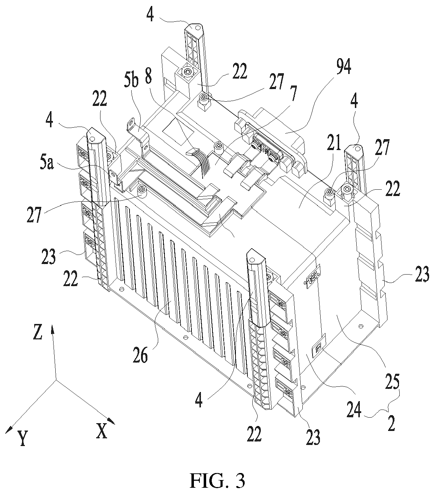

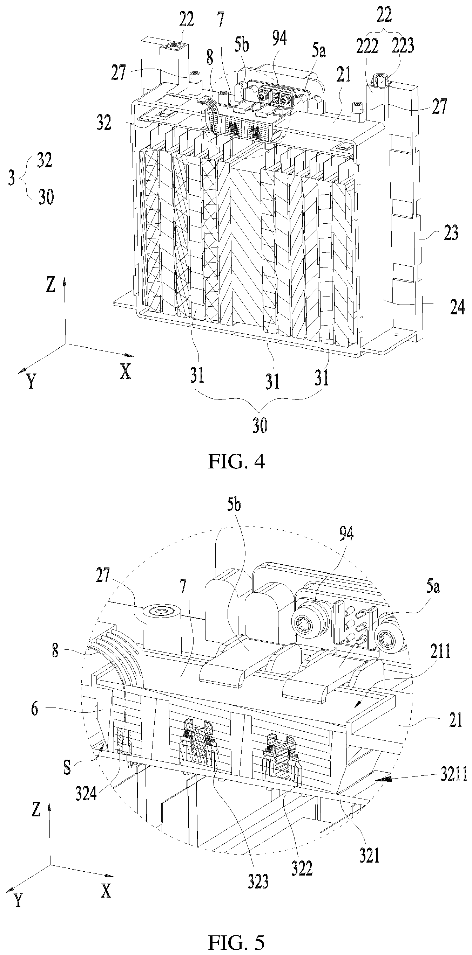

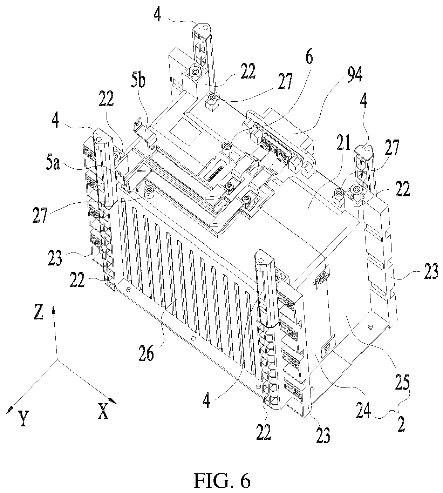

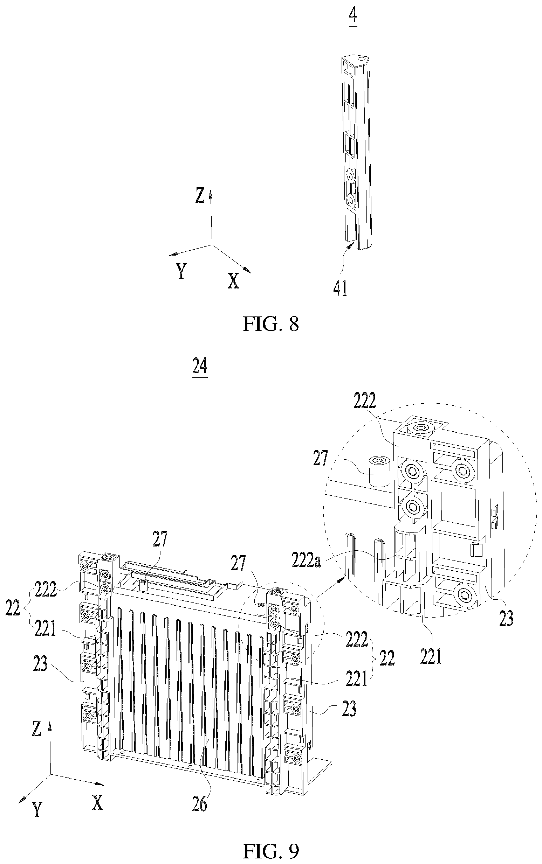

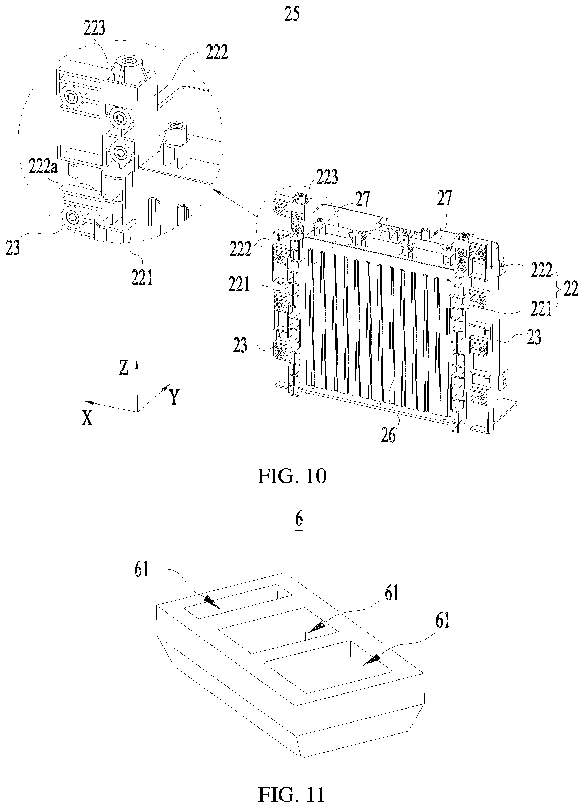

Referring to FIG. 1 to FIG. 11, the battery pack in an embodiment of this application includes a first housing 1, a second housing 2, a cell module 3, and a connecting component 4. The first housing 1 includes a first top wall 11. The second housing 2 is accommodated in the first housing 1 and connected to the first housing 1. The second housing 2 and the first top wall 11 are spaced apart along a first direction Z. The cell module 3 is accommodated in the second housing 2. The connecting component 4 is connected to the first top wall 11 and the second housing 2. Structural strength of the connecting component 4 is greater than structural strength of the second housing 2.

In an embodiment of this application, the second housing 2 and the first top wall 11 are spaced apart so as to provide an accommodation space for other components. When the first housing 1 is subjected to an external impact, the connecting component 4 can transfer the force to the second housing 2, thereby effectively dispersing the stress, reducing the risk of structural damage to the battery pack, and improving the reliability of the battery pack. The connecting component 4 is structurally stronger than the second housing 2, and can withstand a greater force, thereby reducing the risk of fracture of the connecting component 4 when the first housing 1 is subjected to an external impact.

In some embodiments, the connecting component 4 may be a metal piece or a non-metal piece. In some examples, the material of the connecting component 4 may include aluminum, iron, or another metal. Optionally, the connecting component 4 may be a cast aluminum piece or another lightweight metal piece. In some other examples, the material of the connecting component 4 may be a high-strength non-metal polymer material. For example, the material of the connecting component 4 includes a sheet molding compound (SMC) composite material.

In some embodiments, the material of the second housing 2 may be plastic. As an example, the material of the second housing 2 includes at least one of polycarbonate (PC) or acrylonitrile butadiene styrene (ABS).

In some embodiments, the second housing 2 includes a second top wall 21. The second top wall 21 and the first top wall 11 are spaced apart along the first direction Z. A first opening 211 is created on the second top wall 21.

Through the first opening 211, the connection is implemented between a component inside the second housing 2 and a component outside the second housing 2.

In some embodiments, the first direction Z, the second direction X, and the third direction Y are perpendicular to each other.

In some embodiments, the cell module 3 includes a cell assembly 30 and a first circuit board 32. The cell assembly 30 includes a plurality of battery cells 31 arranged along a second direction X. The first direction Z is perpendicular to the second direction X.

In some embodiments, the plurality of battery cells 31 may be connected in series, parallel, or series-and-parallel pattern. The series-and-parallel pattern means a combination of series connection and parallel connection of the plurality of battery cells.

The battery cell 31 may be a lithium-ion battery cell, a sodium-ion battery cell, a magnesium-ion battery cell, or another type of battery cell. The type of the battery cell is not limited herein.

The battery cell 31 may be a hard shell cell or a pouch cell.

The battery cell 31 may be a prismatic cell, a cylindrical cell, or a special-shaped cell.

In some embodiments, along the first direction Z, the first circuit board 32 is located between the cell assembly 30 and the second top wall 21. The first circuit board 32 is electrically connected to the cell assembly 30.

In some embodiments, the first circuit board 32 includes a printed circuit board (PCB, Printed Circuit Board). Optionally, the first circuit board 32 includes a flexible circuit board (FPC, Flexible Printed Circuit).

In some embodiments, the first circuit board 32 includes a battery management system (BMS) module.

In some embodiments, the first circuit board 32 includes a substrate 321, a first connecting terminal 322, and a second connecting terminal 323. The substrate 321 includes a first surface 3211 oriented toward the second top wall 21. The first connecting terminal 322 and the second connecting terminal 323 are disposed on the first surface 3211.

As an example, of the first connecting terminal 322 or the second connecting terminal 323, one is electrically connected to a main positive electrode of the cell assembly 30, and the other is electrically connected to a main negative electrode of the cell assembly 30.

In some embodiments, an accommodation space S is created on the first surface 3211 on a side oriented toward the second top wall 21. The accommodation space S is opposite to the first opening 211 along the first direction Z.

As an example, the first surface 3211 and the second top wall 21 are spaced apart in the first direction Z. The accommodation space S may be a space located between the first surface 3211 and the second top wall 21 and opposite to the first opening 211 along the first direction Z.

In some embodiments, the battery pack further includes a first busbar 5a and a second busbar 5b. The first busbar 5a is connected to the first connecting terminal 322 in the accommodation space S and extends out of the second housing 2. The second busbar 5b is connected to the second connecting terminal 323 in the accommodation space S and extends out of the second housing 2.

With the first busbar 5a connected to the first connecting terminal 322 in the accommodation space S, the junction between the first busbar 5a and the first connecting terminal 322 can be kept in the second housing 2, thereby reducing the risk of a short circuit. With the second busbar 5b connected to the second connecting terminal 323 in the accommodation space S, the junction between the second busbar 5b and the second connecting terminal 323 can be kept in the second housing 2, thereby reducing the risk of a short circuit.

The accommodation space S is opposite to the first opening 211 along the first direction Z. The first busbar 5a and the second busbar 5b may be led out of the second housing 2 through the first opening 211.

In some embodiments, the first busbar 5a is connected to the first connecting terminal 322 by a fastener. As an example, the first busbar 5a is connected to the first connecting terminal 322 by a bolt. Optionally, the bolt is disposed in the accommodation space S.

In some embodiments, the second busbar 5b is connected to the second connecting terminal 323 by a fastener. As an example, the second busbar 5b is connected to the second connecting terminal 323 by a bolt. Optionally, the bolt is disposed in the accommodation space S.

In some embodiments, the battery pack includes a sealing component 6. At least a part of the sealing component 6 is located in the accommodation space S. The sealing component 6 is connected to the first surface 3211 in a contacting manner. A second opening 61 is created on the sealing component 6. Both the first connecting terminal 322 and the second connecting terminal 323 are accommodated in the second opening 61. The battery pack further includes a filler 7. At least a part of the filler 7 fills in the second opening 61 and forms a sealing interface at the first opening 211.

The filler 7 can form a sealing interface at the first opening 211 to block external moisture, impurities, and the like from entering the second housing 2, thereby protecting the battery cell 31 and the second circuit board 32. The filler 7 that fills in the second opening 61 can cover the junction between the first busbar 5a and the first connecting terminal 322 and the junction between the second busbar 5b and the second connecting terminal 323, thereby reducing the risk that the external impurities (such as moisture) implement electrical conduction between the first connecting terminal 322 and the second connecting terminal 323, reducing the risk of a short-circuit, and improving safety performance. The sealing component 6 may limit the position of the filler 7 when the filler 7 fills in the opening, thereby reducing the risk that the filler 7 overflows to other regions of the first surface 3211.

In some embodiments, the sealing component 6 is elastic and in interference fit with the first opening 211 to allow at least a part of the sealing component to be accommodated in the first opening 211. These embodiments of this application can reduce the risk that the filler 7 enters the second housing 2 from between the first opening 211 and the sealing component 6.

In some embodiments, the filler 7 may be insulative. As an example, an insulating glue may be injected into the accommodation space S through the first opening 211. The insulating glue cures to form the filler 7.

In some embodiments, during assembling of the battery pack, the sealing component 6 may be extended into the accommodation space S through the first opening 211 first, and the sealing component 6 may be caused to abut against the first surface 3211. Subsequently, the first busbar 5a is extended into the second opening 61, and is connected to the first connecting terminal 322 by a locking bolt. The second busbar 5b is extended into the second opening 61, and is connected to the second connecting terminal 323 by a locking bolt. Subsequently, an insulating gel is injected into the first opening 211 and the second opening 61. The insulating gel fills the second opening 61 and then continues to fill the first opening 211, thereby forming a sealing interface at the first opening 211 to seal the first opening 211. Finally, the insulating gel cures to form the filler 7.

In some embodiments, the sealing component 6 includes a plurality of second openings 61. The first connecting terminal 322 and the second connecting terminal 323 are accommodated in different second openings 61 respectively. The filler 7 fills a plurality of openings 61.

The sealing component 6 can isolate the first connecting terminal 322 from the second connecting terminal 323, thereby increasing a creepage distance between the first connecting terminal 322 and the second connecting terminal 323, and improving safety.

In some embodiments, the first circuit board 32 further includes a connector 324 disposed on the first surface 3211. The connector 324 is accommodated in the second opening 61. The battery pack further includes a harness 8. The harness 8 is connected to the connector 324 in the accommodation space S, and extends out of the second housing 2.

In some embodiments, the number of second openings 61 is three. The first connecting terminal 322, the second connecting terminal 323, and the connector 324 are disposed in the three second openings 61 respectively.

In an alternative embodiment, the number of second openings 61 is one. The first connecting terminal 322, the second connecting terminal 323, and the connector 324 are disposed in the same second opening 61 and spaced apart.

In some embodiments, the second housing 2 includes a first component 22. At least a part of the first component 22 protrudes beyond a surface of the second top wall 21, the surface being oriented toward the first top wall 11. The first component 22 is connected to the connecting component 4.

The disposed first component 22 increases the strength of the second housing 2, the strength of connection between the first component 22 and the connecting component 4, and the impact resistance.

In some embodiments, the second housing 2 includes two first sidewalls 26 disposed opposite to each other along a third direction Y The second top wall 21 is connected to the two first sidewalls 26.

In some embodiments, the first component 22 includes a first part 221 and a second part 222 disposed along the first direction Z. The first part 221 protrudes beyond the first sidewall 26 along the third direction Y. The second part 222 protrudes beyond the first top wall 11 along the first direction Z. The connecting component 4 is disposed on a side of the second part 222 along the third direction Y and connected to the second part 222. The first part 221 is connected to the connecting component 4 along the first direction Z in a contacting manner.

When the impact force on the first top wall 11 is transmitted to the connecting component 4, the first part 221 can support the connecting component 4 in the first direction Z and withstand the impact force, thereby reducing the force on the first sidewall 26 and reducing the risk of structural damage to the second housing 2.

In some embodiments, the connecting component 4 is fixedly connected to the second part 222 by a fastener.

In some embodiments, a first recess 41 is disposed at an end of the connecting component 4, the end being close to the first part 221. A first bulge 222a is disposed at an end of the second part 222, the end being close to the first part 221. The first bulge 222a is connected to the first part 221 in a contacting manner and accommodated in the first recess 41.

The first bulge 222a and the first recess 41 are in concave-convex fit with each other, and can play a positioning role in assembling the connecting component 4 and the second housing 2. With the first bulge 222a disposed, the contact area between the connecting component 4 and the first component 22 is increased, thereby facilitating transfer and dispersal of the stress.

In some embodiments, the first part 221 assumes a rib structure. The rib-structured first part 221 can reduce the weight of the first part 221 and increase the energy density of the battery pack while ensuring sufficient strength.

As an example, the rib structure includes an outer frame and a plurality of reinforcing ribs disposed in the outer frame.

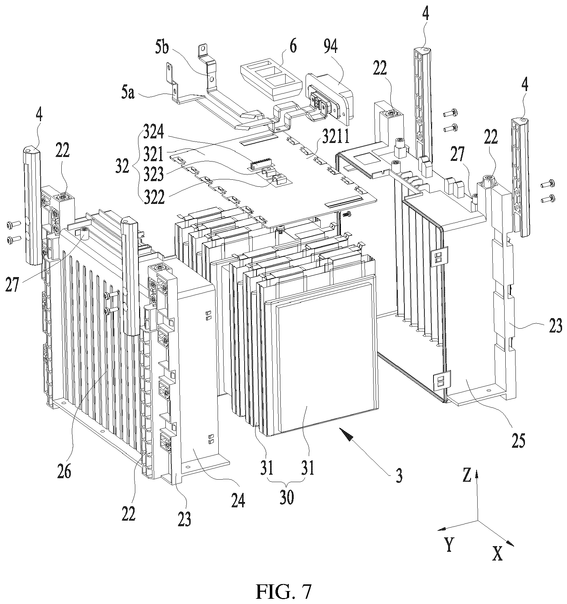

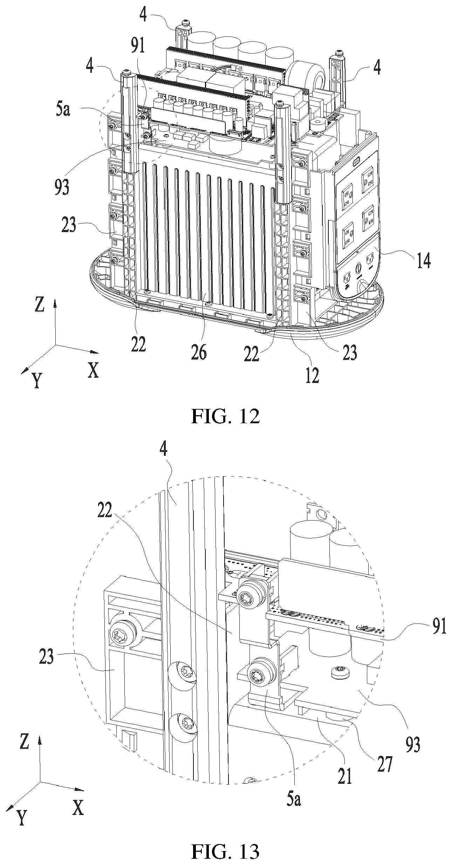

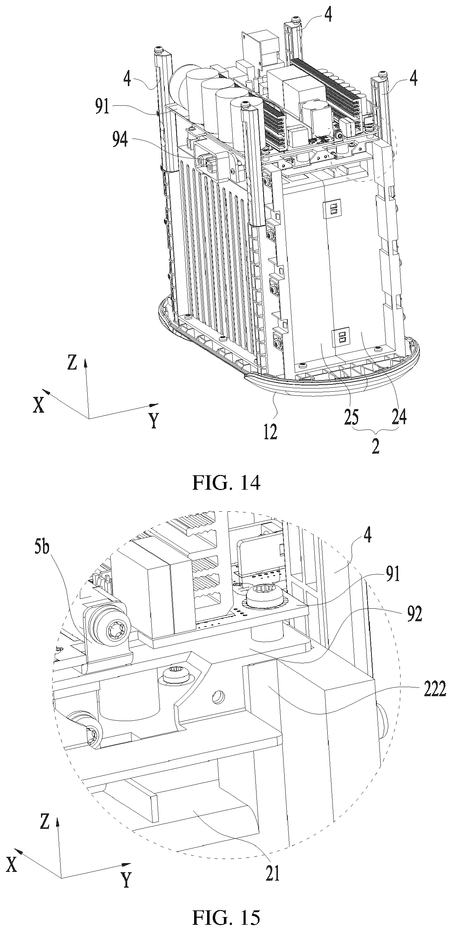

In some embodiments, referring to FIG. 7 to FIG. 15, the battery pack further includes a second circuit board 91. The second circuit board 91 is located between the first top wall 11 and the second top wall 21 and connected to the second part 222.

The second part 222 can provide a mounting site for the second circuit board 91, and stably support the second circuit board 91, thereby reducing the risk of wobbling of the second circuit board 91 when the battery pack is subjected to an external impact, and improving the reliability of the battery pack.

In some embodiments, the second circuit board 91 includes a printed circuit board (PCB, Printed Circuit Board).

In some embodiments, the second circuit board 91 may be configured to implement AC-DC conversion.

In some embodiments, the battery pack further includes a bracket 92. The bracket 92 is located between the second circuit board 91 and the second top wall 21. The second housing 2 includes a plurality of the first components 22. The bracket 92 is connected to the second circuit board 91 and at least a part of the plurality of the first components 22.

The bracket 92 can support the second circuit board 91 from a lower side, thereby increasing the stability of the second circuit board 91 and reducing the risk of deformation of the second circuit board 91.

In some embodiments, the bracket 92 is connected to the second part 222 of the first component 22. Optionally, the bracket 92 abuts against the second part 222 along the first direction Z.

In some embodiments, the second part 222, the bracket 92, and the second circuit board 91 are stacked along the first direction Z, and connected by a fastener.

In some embodiments, the bracket 92 is connected to at least two first components 22. The second housing 2 can provide at least two connection sites for the bracket 92, thereby increasing the strength of connection between the bracket 92 and the second housing 2, and improving the stability of the bracket 92 and the second circuit board 91.

In some embodiments, a second bulge 223 is disposed on a part of the first components 22. The second bulges 223 protrude beyond the second part 222. The second bulges 223 are connected to the second circuit board 91. The remaining first components 22 are connected to the second circuit board 91 by the bracket 92.

On the first components 22 that are not connected to the bracket 92, the second bulges 223 may be disposed to directly abut against the second circuit board 91, so as to uniformly support the second circuit board 91 and reduce skewness of the second circuit board 91.

In some embodiments, a nut is integrated in the second bulge 223. The second circuit board 91 is connected to the second bulge 223 by a fastener.

In some embodiments, the second housing 2 includes four first components 22. The bracket 92 is connected to three first components 22. The second bulge 223 is disposed on none of three first components 22. A second bulge 223 is disposed on one first component 22. The three first components 22 on which no second bulge 223 is disposed are connected to the bracket 92 and the second circuit board 91 by fasteners. The one first component 22 on which the second bulge 223 is disposed is connected to the second circuit board 91 by a fastener.

In some embodiments, the bracket 92 is a sheet metal bracket.

In some embodiments, the second housing 2 includes a first sub-housing 24 and a second sub-housing 25 disposed along the third direction Y

The first sub-housing 24 is connected to and fits the second sub-housing 25 to form an internal space for accommodating the cell module 3. As an example, the first sub-housing 24 is snap-fitted to the second sub-housing 25. A gel is disposed at the junction between the first sub-housing 24 and the second sub-housing 25 to serve functions of bonding, sealing, and the like.

In some embodiments, the first sub-housing 24 may be formed in one piece by injection molding. The first sub-housing 24 includes one first sidewall 26 and at least two first components 22. The first sub-housing 24 is formed in one piece, and is structurally strong and can provide more stable support for the connecting component 4, thereby reducing the risk of structural damage to the battery pack subjected to an external impact.

In some embodiments, the second sub-housing 25 may be formed in one piece by injection molding. The second sub-housing 25 includes another first sidewall 26 and at least two first components 22. The second sub-housing 25 is formed in one piece, and is structurally strong and can provide more stable support for the connecting component 4, thereby reducing the risk of structural damage to the battery pack subjected to an external impact.

In some embodiments, the second housing 2 further includes a third bulge 27. The third bulge 27 protrudes beyond a surface of the second top wall 21, the surface being oriented toward the first top wall 11. In the first direction Z, an amount of height by which the second part 222 protrudes beyond the second top wall 21 is greater than an amount of height by which the third bulge 27 protrudes beyond the second top wall 21. The battery pack further includes a third circuit board 93. The third circuit board 93 is located between the second circuit board 91 and the second top wall 21 and connected to the third bulge 27.

The third bulge 27 can provide a mounting site for the third circuit board 93, and stably support the third circuit board 93, thereby reducing the risk of wobbling of the third circuit board 93 when the battery pack is subjected to an external impact, and improving the reliability of the battery pack. The amount of height by which the third bulge 27 protrudes beyond the second top wall 21 is less than the amount of height by which the second part 222 protrudes beyond the second top wall 21, thereby allowing the second circuit board 91 and the third circuit board 93 to be at different heights, and reducing the risk of mutual interference between the second circuit board 91 and the third circuit board 93.

In some embodiments, a plurality of third bulges 27 are disposed. As an example, 4 to 6 third bulges 27 are disposed.

In some embodiments, the third circuit board 93 includes a printed circuit board (PCB, Printed Circuit Board).

In some embodiments, the third circuit board 93 may be configured to convert voltage. As an example, the third circuit board 93 may stabilize a fluctuating voltage of a power source provided by an outside source.

In some embodiments, the battery pack further includes an external interface 94 disposed on an outer side of the second housing 2. As an example, a plurality of battery packs may be connected in series, parallel, or series-and-parallel pattern by the external interface 94.

In some embodiments, the first busbar 5a connects the first connecting terminal 322 to the second circuit board 91, the third circuit board 93, and the external interface 94. The second busbar 5b connects the second connecting terminal 323 to the second circuit board 91, the third circuit board 93, and the external interface 94.

The first busbar 5a and the second busbar 5b connect the first circuit board 32, the second circuit board 91, the third circuit board 93, and the external interface 94 together, thereby improving the space utilization and reducing connection complexity.

In some embodiments, the first connecting terminal 322 is a positive electrode terminal. The first busbar 5a connects a positive electrode of the first circuit board 32, a positive electrode of the second circuit board 91, a positive electrode of the third circuit board 93, and a positive electrode of the external interface 94. The second connecting terminal 323 is a negative electrode terminal. The second busbar 5b connects a negative electrode of the first circuit board 32, a negative electrode of the second circuit board 91, a negative electrode of the third circuit board 93, and a negative electrode of the external interface 94.

In some embodiments, the first busbar 5a and the second busbar 5b are both flexible copper busbars.

In some embodiments, an insulating sleeve wraps around the first busbar 5a, and an insulating sleeve wraps around the second busbar 5b.

In some embodiments, a plurality of connecting components 4 are disposed. The plurality of connecting components 4 can further improve the overall structural strength of the battery pack, reduce the risk of structural damage to the battery pack, and improve the reliability of the battery pack.

In some embodiments, the number of connecting components 4 is the same as the number of first components 22. The connecting components 4 correspond to the first components 22 one-to-one.

In some embodiments, four connecting components 4 are disposed. The four connecting components 4 are disposed at four corner positions of the second housing 2 respectively.

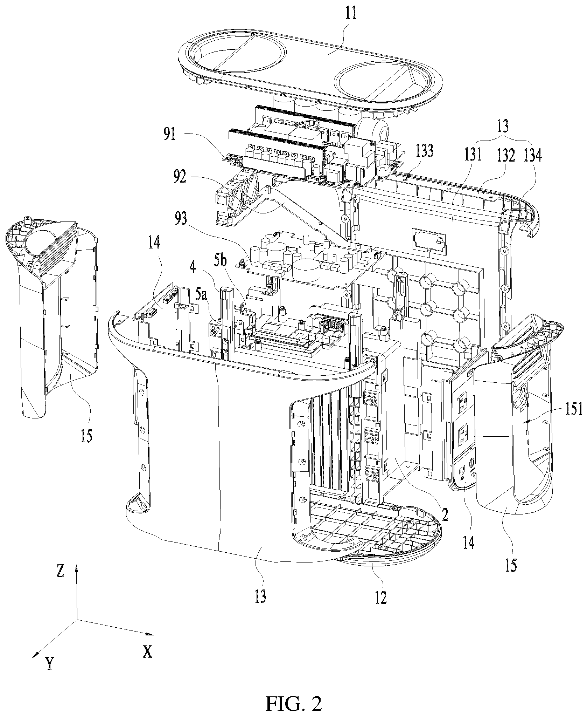

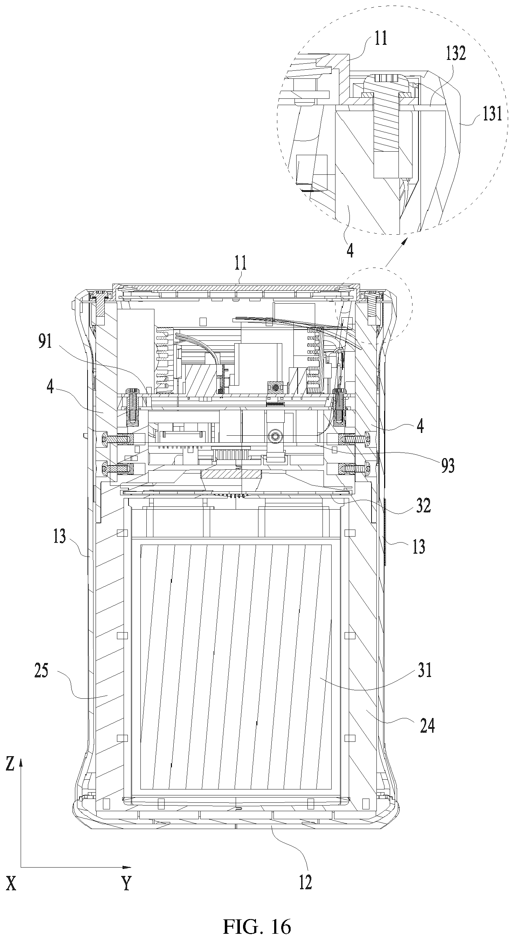

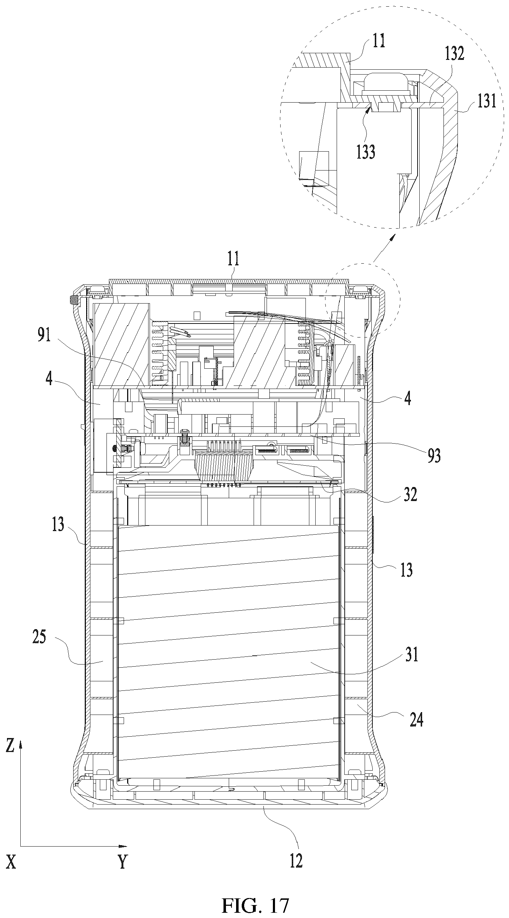

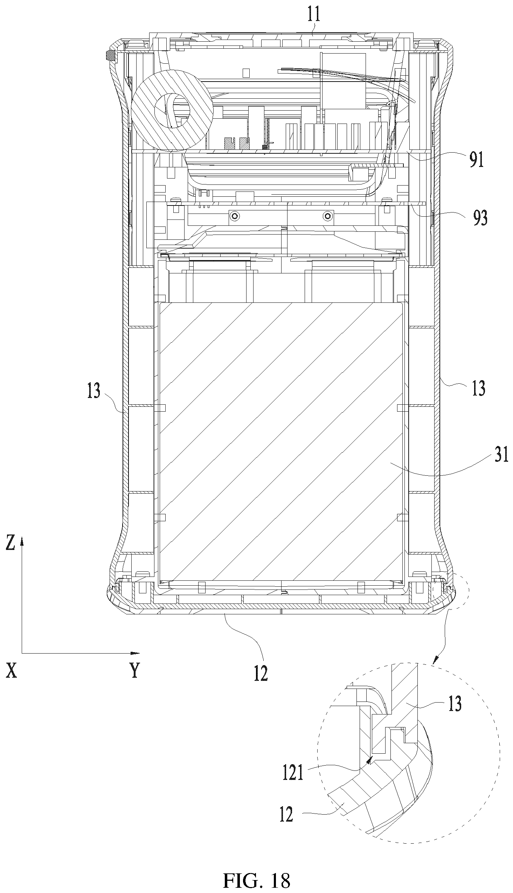

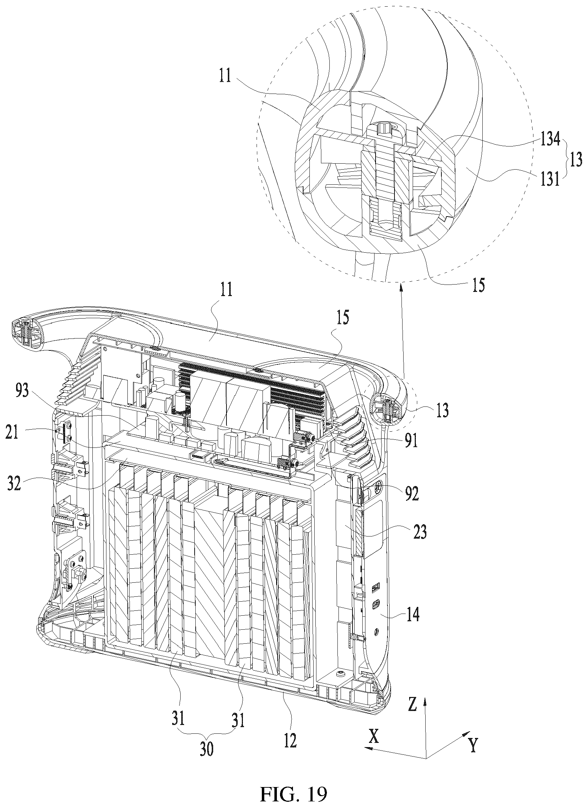

In some embodiments, referring to FIG. 2 and FIG. 16 to FIG. 19, the first housing 1 further includes a first bottom wall 12, two first side shells 13, and two control panels 14. The first bottom wall 12 and the first top wall 11 are disposed along the first direction Z. The first bottom wall 12 is connected to the second housing 2. The two first side shells 13 are disposed on two sides of the second housing 2 along the third direction Y respectively, and connected to the second housing 2. The two control panels 14 are disposed on two sides of the second housing 2 along the second direction X respectively, and connected to the second housing 2. The first side shell 13 is connected to the first top wall 11 and the first bottom wall 12.

In some embodiments, the second housing 2 is fixedly connected to the first bottom wall 12 by a fastener. Optionally, the second housing 2 is fixedly connected to the first bottom wall 12 by a bolt.

In some embodiments, the first side shell 13 is fixedly connected to the second housing 2 by a fastener.

In some embodiments, the control panels 14 are snap-fitted to the second housing 2.

In some embodiments, a protruding second component 23 is disposed at two ends of the second housing 2 along the second direction X. The first side shell 13 is connected to the second component 23.

The protruding second component 23 is structurally strong. Connecting the first side shell 13 to the second component 23 increases the strength of connection between the first side shell 13 and the second housing 2, and improves the overall stability of the battery pack.

In some embodiments, the second housing 2 includes four second components 23. The four second components 23 are disposed at four corner positions of the second housing 2 respectively. Optionally, the four second components 23 are connected to the four first components 22 respectively.

One first side shell 13 is connected to the two second components 23 by a bolt. The other first side shell 13 is connected to the other two second components 23 by a bolt.

In some embodiments, the two second components 23 located at one end of the second housing 2 along the second direction X are snap-fitted to one control panel 14. The two second components 23 located at the other end of the second housing 2 along the second direction X are snap-fitted to the other control panel 14.

In some embodiments, one control panel 14 is a direct-current control panel, and the other control panel 14 is an alternating current control panel.

In some embodiments, the first sub-housing 24 includes two first components 22 and two second components 23. The second sub-housing 25 includes two first components 22 and two second components 23.

In some embodiments, the first side shell 13 includes a shell body 131 and a first connecting plate 132 extending from an inner surface of the shell body 131. In the first direction Z, the first connecting plate 132 is located between the connecting component 4 and the first top wall 11, and connected to the connecting component 4 and the first top wall 11.

The connecting component 4 and the first top wall 11 can limit the position of the first connection plate 132 from both sides of the first direction Z, thereby improving the stability of the first side shell 13. The connecting component 4, the first connection plate 132, and the first top wall 11 are connected concurrently, so that the impact force on the first top wall 11 and the first side shell 13 can be dispersed through the connecting component 4, thereby improving the overall structural strength of the battery pack and reducing the risk of failure of the battery pack.

In some embodiments, the connecting component 4, the first connecting plate 132, and the first top wall 11 are connected by a fastener. As an example, a bolt penetrates the first top wall 11 and the first connecting plate 132, and then is threadedly connected to the connecting component 4.

In some embodiments, a first hole 133 is created on the first connecting plate 132. A part of the first top wall 11 is accommodated in the first hole 133.

In assembling the first top wall 11 and the first side shell 13, the first hole 133 can play a positioning role. In addition, when the battery pack is subjected to an external impact, the part of the first top wall 11, which extends into the first hole 133, may positionally constrain, and be positionally constrained by, the first connecting plate 132, so as to reduce the deformation of the first top wall 11 and the first side shell 13.

In some embodiments, the first housing 1 further includes two second side shells 15. The two second side shells 15 are disposed along the second direction X. Each of the second side shells 15 is connected to the first top wall 11 and the two first side shells 13. A third opening 151 is created on the second side shell 15. At least a part of the control panels 14 is exposed through the third opening 151.

The second side shells 15 can protect the control panels 14, and limit the positions of the control panels 14, thereby improving the stability of the control panels 14. The operating interface of the control panel 14 can be exposed through the third opening 151 to facilitate user operation.

In some embodiments, a part of the control panels 14 is embedded into the third opening 151. The second side shells 15 can further clutch the control panels 14.

In some embodiments, the first side shell 13 further includes a second connecting plate 134 extending from the inner surface of the shell body 131. In the first direction Z, the second connecting plate 134 is located between the second side shell 15 and the first top wall 11, and connected to the second side shell 15 and the first top wall 11.

The disposed second connecting plate 134 facilitates implementation of the fixed connection between the first side shell 13, the second side shell 15, and the first top wall 11, and increases the structural strength of the battery pack as a whole.

In some embodiments, the first top wall 11, the second connecting plate 134, and the second side shell 15 are connected by a bolt.

In some embodiments, the first side shell 13 includes two second connecting plates 134. The two second connecting plates 134 are located on two sides of the first connecting plate 132 respectively.

In some embodiments, a second recess 121 is disposed on the first bottom wall 12. One end of the first side shell 13 along the first direction Z is accommodated in the second recess 121.

During assembling, the second recess 121 serves to define the position of the first side shell 13. At the same time, the first bottom wall 12 can be snap-fitted to the first side shell 13 through the second recess 121, thereby increasing the overall structural strength of the battery pack.

This application further provides an electrical device. The electrical device includes the battery pack according to any one of the embodiments described above. The battery pack can provide electrical energy for the electrical device in use. The electrical device according to an embodiment of this application may be a portable energy storage device, such as a portable energy-storage mobile power supply.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A battery pack, **characterized in that** the battery pack comprises:
a first housing (1), comprising a first top wall (11);
a second housing (2), accommodated in the first housing and connected to the first housing, the second housing and the first top wall are spaced apart along a first direction (Z);
a cell module (3), accommodated in the second housing; and
a plurality of connecting components (4), connected to the first top wall and the second housing, wherein
a structural strength of the connecting component is greater than a structural strength of the second housing.

2. The battery pack according to claim 1, **characterized in that**
the second housing comprises a second top wall (21), the second top wall and the first top wall are spaced apart along the first direction, and a first opening (211) is disposed on the second top wall;
the cell module comprises a cell assembly (30) and a first circuit board (32), the cell assembly comprises a plurality of battery cells (31) arranged along a second direction (X), and the first direction is perpendicular to the second direction;
along the first direction, the first circuit board is located between the cell assembly and the second top wall, and the first circuit board is electrically connected to the cell assembly;
the first circuit board comprises a substrate (321), a first connecting terminal (322), and a second connecting terminal (323); the substrate comprises a first surface (3211) facing toward the second top wall, and the first connecting terminal and the second connecting terminal are disposed on the first surface;
an accommodation space (S) is provided at a side of the first surface, and the accommodation space is opposite to the first opening along the first direction; and
the battery pack further comprises a first busbar (5a) and a second busbar (5b), the first busbar is connected to the first connecting terminal in the accommodation space and extends out of the second housing, and the second busbar is connected to the second connecting terminal in the accommodation space and extends out of the second housing.

3. The battery pack according to claim 2, **characterized in that** the battery pack comprises a sealing component (6), at least a part of the sealing component is located in the accommodation space, and the sealing component is in direct contact with the first surface;
a second opening (61) is disposed on the sealing component, and both the first connecting terminal and the second connecting terminal are accommodated in the second opening; and
the battery pack further comprises a filler (7), and at least a part of the filler is filled in the second opening and forms a sealing interface at the first opening.

4. The battery pack according to claim 3, **characterized in that** the sealing component comprises a plurality of second openings, and the first connecting terminal and the second connecting terminal are accommodated in different second openings respectively.

5. The battery pack according to any one of claims 2 to 4, **characterized in that** the second housing comprises a plurality of first components (22), and at least a part of the first component protrudes beyond a surface of the second top wall along the first direction, the surface of the second top wall being facing toward the first top wall; and the first component is connected to the connecting component.

6. The battery pack according to claim 5, **characterized in that**
the second housing comprises two first sidewalls (26) disposed opposite to each other along a third direction (Y); the first direction, the second direction, and the third direction are perpendicular to each other;
the first component comprises a first part (221) and a second part (222) disposed along the first direction, the first part protrudes beyond the first sidewall along the third direction, and the second part protrudes beyond the second top wall along the first direction; and
the connecting component is disposed at a side of the second part along the third direction and connected to the second part, and the first part is in direct contact with the connecting component along the first direction.

7. The battery pack according to claim 6, **characterized in that**
a first recess (41) is disposed at an end of the connecting component, the end of the connecting component is close to the first part than another end of the connecting component; and
a first bulge (222a) is disposed at an end of the second part, the end of the second part is close to the first part than another end of the second part; and the first bulge is in direct contact with the first part in and is accommodated in the first recess.

8. The battery pack according to claim 6 or 7, **characterized in that** the battery pack further comprises a second circuit board (91), and the second circuit board is located between the first top wall and the second top wall and connected to the second part.

9. The battery pack according to claim 8, **characterized in that** the battery pack further comprises a bracket (92), and the bracket is located between the second circuit board and the second top wall; and
the bracket is connected to the second circuit board and one or more of the first components.

10. The battery pack according to claim 9, **characterized in that**
a second bulge (223) is disposed on a part of first components, and the second bulge protrudes beyond the second part along the first direction;
the second bulge is connected to the second circuit board; and
the remaining first components from the plurality of first components other than the part of the first components are connected to the second circuit board by the bracket.

11. The battery pack according to any one of claims 6 to 10, **characterized in that**
the second housing comprises a first sub-housing (24) and a second sub-housing (25) disposed along the third direction;
the first sub-housing comprises one first sidewall and at least two first components; and
the second sub-housing comprises the other first sidewall and at least another two first components.

12. The battery pack according to any one of claims 8 to 11, **characterized in that** the second housing further comprises a plurality of third bulges(27), and the third bulge protrude beyond a surface of the second top wall along the first direction, the surface of the second top wall faces toward the first top wall;
in the first direction, an amount of height by which the second part protrudes beyond the second top wall is greater than an amount of height by which the third bulge protrudes beyond the second top wall; and
the battery pack further comprises a third circuit board (93), and the third circuit board is located between the second circuit board and the second top wall and connected to the third bulge.

13. The battery pack according to any one of claims 1 to 12, **characterized in that**
the first housing further comprises a first bottom wall (12), two first side shells (13), and two control panels (14); the first bottom wall and the first top wall are disposed along the first direction; the first bottom wall is connected to the second housing; the two first side shells are disposed at two sides of the second housing along a third direction respectively, and connected to the second housing; and the two control panels are disposed at two other sides of the second housing along a second direction respectively, and connected to the second housing; and
the first side shells are connected to the first top wall and the first bottom wall;
the first direction, the second direction, and the third direction are perpendicular to each other.

14. The battery pack according to claim 13, **characterized in that** the second housing comprises a plurality of protruding second components (23) being disposed at two ends of the second housing along the second direction; and the first side shell (13) is connected to the second components (23).

15. The battery pack according to claim 13 or 14, **characterized in that** the first side shell comprises a shell body (131) and a first connecting plate (132) extending from an inner surface of the shell body; and
along the first direction, the first connecting plate is located between the connecting component and the first top wall, and is connected to the connecting component and the first top wall.

16. The battery pack according to claim 15, **characterized in that** a first hole (133) is disposed on the first connecting plate, and a part of the first top wall is accommodated in the first hole.

17. The battery pack according to claim 15 or 16, **characterized in that** the first housing further comprises two second side shells (15), and the two second side shells are disposed along the second direction;
each of the second side shells is connected to the first top wall and the two first side shells; and
the second side shell comprises a third opening (151), and at least a part of the control panels is exposed through the third opening.

18. The battery pack according to claim 17, **characterized in that** the first side shell further comprises a second connecting plate (134) extending from the inner surface of the shell body; and
along the first direction, the second connecting plate is located between the second side shell and the first top wall, and connected to the second side shell and the first top wall.

19. The battery pack according to any one of claims 13 to 18, **characterized in that** a second recess (121) is disposed on the first bottom wall, and one end of the first side shell along the first direction is accommodated in the second recess.
